**Europäisches Patentamt**

(19) **European Patent Office**

**Office européen des brevets**

(11) Veröffentlichungsnummer: **0 136 535**

**A1**

(12) # EUROPÄISCHE PATENTANMELDUNG

(21) Anmeldenummer: **84110251.0**

(22) Anmeldetag: **29.08.84**

(51) Int. Cl.⁴: **A 01 B 73/04**

(30) Priorität: **15.09.83 US 532636**

(43) Veröffentlichungstag der Anmeldung:
**10.04.85 Patentblatt 85/15**

(84) Benannte Vertragsstaaten:
**DE FR GB SE**

(71) Anmelder: **DEERE & COMPANY**
**1 John Deere Road**
**Moline Illinois 61265(US)**

(72) Erfinder: **Jensen, James Keith**
**8254 N.W. Oakwood**
**Ankeny Iowa 50021(US)**

(72) Erfinder: **Fox, Robert Eugene**

**Minburn Iowa 50167(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Landwirtschaftlich nutzbares Arbeitsgerät.**

(57) Ein Bodenbearbeitungsgerät (10) weist einen Hauptrahmen (12) mit daran schwenkbar angeschlossenen, zwischen einer Arbeits- und Transportlage verschwenkbaren Rahmenträgern (20) auf, die in der Transportlage in einer am Hauptrahmen (12) angeordneten U-förmigen Halterung (40) aufnehmbar und mittels eines ersten Verriegelungsbolzens (74) sicherbar sind, der hierzu in in der Halterung vorgesehene Langlochöffnungen (52, 53) einsteckbar ist. An dem Rahmenträger (20) ist eine Verriegelungsklinke schwenkbar gelagert, die auf einen am Hauptrahmen (12) vorgesehenen zweiten Verriegelungsbolzen einrastbar ist und verhindert, daß der Rahmenträger aus seiner vertikalen Lage in die horizontal verlaufende Arbeitslage verschwenkbar ist, wenn der erste Verriegelungsbolzen (74) aus den Langlochöffnungen (52, 53) herausgenommen wird und die Hydraulikzylinder zur Verstellung der Rahmenträger (20) diese aus irgendeinem Grunde nicht in ihrer Transportstellung halten können bzw. ein unbeabsichtigtes Verstellen der Rahmenträger (20) in die Arbeitslage verhindern. Soll jedoch der Rahmenträger (20) in seine Arbeitslage verschwenkt werden, so kann der erste Verriegelungsbolzen unterhalb der Verriegelungsklinke (72) in eine am Hauptrahmen (12) vorgesehene Langlochöffnung (92) eingesteckt werden, so daß die Verriegelungsklinke in einer geneigt verlaufenden Lage sich auf dem ersten Verriegelungsbolzen (56) abstützt und den zweiten Verriegelungsbolzen (74) freigibt.

Fig. 3

Croydon Printing Company Ltd

## Landwirtschaftlich nutzbares Arbeitsgerät

Die Erfindung bezieht sich auf ein landwirtschaftlich nutzbares Arbeitsgerät mit einem Hauptrahmen, an dem Rahmenträger gelenkig angeschlossen und zwischen einer horizontal verlaufenden Arbeitsstellung und einer vertikal verlaufenden Transportstellung verschwenkbar sind, wobei die Rahmenträger in der Transportstellung über eine Verriegelungsvorrichtung arretierbar sind, die zumindest aus einer am Hauptrahmen angeordneten U-förmigen Halterung zur Aufnahme von Rahmenteilen des Rahmenträgers und zur Sicherung des Rahmenträgers in der Halterung aus einem in Öffnungen der Halterung einsteckbaren Verriegelungsbolzen besteht.

Es ist bereits ein Bodenbearbeitungsgerät der eingangs aufgeführten Art bekannt (US-PS 3 967 684), das aus einem Hauptrahmen mit seitlich daran angeschlossenen verschwenkbaren Seitenrahmen besteht, die in ihrer Transportlage in einer am Hauptrahmen U-förmig angeordneten Halterung aufgenommen und dann mittels eines einsteckbaren Verriegelungsbolzens in dieser Stellung gesichert werden können. Die beiden am Hauptrahmen angeordneten Seitenrahmen können durch einen Hydraulikzylinder von ihrer Arbeitsstellung in ihre Transportstellung und umgekehrt ohne weiteres verschwenkt werden. Ist beispielsweise der Verriegelungsbolzen aus der U-förmigen Halterung herausgenommen und beachtet die Bedienungsperson nicht, daß das Hydrauliksystem bzw. der Hydraulikzylinder mit Druckmittel beaufschlagt ist, so kann der Rahmenträger bzw. der Seitenrahmen zu schnell in seine Arbeitsstellung verschwenkt werden, was zu einer Beschädigung des Arbeitsgerätes führt.

Demgegenüber liegt der Erfindung die Aufgabe zugrunde, Vorkehrungen zu treffen, damit auch bei Druckmittelentlastung des Hydrauliksystems ein unbeabsichtigtes Verstellen der am Hauptrahmen angeschlossenen Rahmenträger verhindert wird. Diese Aufgabe ist dadurch gelöst worden, daß der Verriegelungsvorrichtung eine den Rahmenträger in der Transportstellung sichernde Verriegelungsklinke zugeordnet ist, die selbsttätig in eine den Rahmenträger sichernde Transportstellung verschwenkbar ist und in dieser Stellung verharrt, bis der Verriegelungsbolzen in eine zweite Position bringbar ist, in der die Verriegelungsklinke sich auf dem ersten Verriegelungsbolzen abstützt und eine Entriegelungsstellung einnimmt. Durch die vorteilhafte Verwendung einer Verriegelungsvorrichtung läßt sich der am Hauptrahmen angeschlossene Rahmenträger in der Transportlage ohne weiteres sichern, auch dann, wenn beispielsweise der Verriegelungsbolzen aus der U-förmigen Halterung zur Aufnahme der Rahmenteile des Rahmenträgers entfernt worden ist, beispielsweise wenn Vorkehrungen getroffen werden, um den Rahmenträger in seine Transportlage zu verschwenken. Die Verriegelungsvorrichtung verhindert also in dem Zeitraum, in dem die Bedienungsperson sich unterhalb der Rahmenträger aufhält, ein unbeabsichtigtes Verstellen der Rahmenträger, da die Verriegelungsvorrichtung selbsttätig in ihrer den Rahmenträger sichernden Stellung verschwenkbar ist. Soll jedoch der Rahmenträger in seine Transportstellung verschwenkt werden, so kann der Verriegelungsbolzen aus der U-förmigen Halterung herausgenommen werden und in eine zweite am Hauptrahmen vorgesehene Bohrung eingesteckt werden, die unterhalb der Verriegelungsklinke liegt und diese in einer schräg verlaufenden Lage hält, in der der zweite Verriegelungsbolzen durch die Verriegelungsklinke freigegeben ist, so daß dann der Rahmenträger ohne weiteres in die Transportlage verschwenkt werden kann, da nunmehr verhindert wird, daß die Verriegelungsklinke in ihre Verriegelungsstellung selbsttätig zurückschwenkt.

Hierzu ist es gemäß der Erfindung vorteilhaft, daß der Verriegelungsbolzen unterhalb der Verriegelungsklinke am verschwenkbaren Rahmenträger in eine Öffnung einsetzbar ist und ein zweiter Verriegelungsbolzen mit Abstand dazu am Hauptrahmen zur selbsttätigen Aufnahme und Arretierung der Verriegelungsklinke bei Einnahme der Transportstellung des Rahmenträgers angeordnet ist. Durch Umstecken des Verriegelungsbolzens in eine zweite Stellung unterhalb der Verriegelungsklinke kann diese in eine Entriegelungsstellung verschwenkt werden und somit die Verschwenkung des Rahmenträgers in die Arbeitsstellung ermöglichen. Außerdem ist es vorteilhaft, daß zur Verschwenkung der Verriegelungsklinke in eine Entriegelungsstellung der erste Verriegelungsbolzen oberhalb des zweiten am Hauptrahmen angeordneten Verriegelungsbolzens in die am Rahmenträger vorgesehene Langlochöffnung einsetzbar ist und daß die am Hauptrahmen angeordnete, zwei parallel zueinander verlaufende Schenkel aufweisende, U-förmige Halterung koaxial zueinander verlaufende Langlochöffnungen zur Aufnahme des einen Handgriff aufweisenden Verriegelungsbolzens aufweist, wobei das dem Handgriff gegenüberliegende Ende einen Sicherungsstift trägt, der in Arretierungsstellung des Handgriffes mittels einer am Schenkel angeordneten Kappe abdeckbar ist. Durch die Verwendung von in der U-förmigen Halterung angeordneten Langlochöffnungen läßt sich der Verriegelungsbolzen mit einem in etwa parallel zum Handgriff des Verriegelungsbolzens vorgesehenen Sicherungsstift ohne weiteres in die Langlochöffnungen einführen und sichern, so daß ein unbeabsichtigtes Herausgleiten des Verriegelungsbolzens verhindert wird. Die auf der einen Seite der Halterung vorgesehene Kappe verhindert eine Beschädigung des Sicherungsstiftes.

In weiterer Ausgestaltung der Erfindung ist es vorteilhaft, daß die Verriegelungsklinke einen Hakenteil mit einer auf dem zweiten Verriegelungsbolzen aufstützbaren Führungsfläche aufweist, daß der Hakenteil eine horizontal verlaufende Langlochöffnung mit einem vertikalen Schlitz zur Aufnahme des zweiten Verriegelungsbolzens aufweist, wobei bei Einnahme der vertikalen Transportlage des Rahmenträgers der Schlitz über dem zweiten Verriegelungsbolzen liegt und diesen selbsttätig übergreift, wenn der erste Verriegelungsbolzen aus seiner am Rahmenträger vorgesehenen Langlochöffnung herausgenommen wird, wobei ein horizontal verlaufender, die Langlochöffnung bildender Steg unter den zweiten Verriegelungsbolzen bewegbar ist, der eine Aufwärtsverstellung der Verriegelungsklinke verhindert, und daß die Verriegelungsklinke aus parallel zueinander verlaufenden Platten mit je einem Hakenteil gebildet ist und einen die Platten verbindenden Steg aufweist, der zur Begrenzung der Schwenkbewegung der Verriegelungsklinke gegen Rahmenteile des Rahmenträgers zur Anlage kommt, wobei die Hakenteile in der Transportstellung des Rahmenträgers diesen umgeben und auf dem zweiten sich durch den Rahmenträger erstreckenden Verriegelungsbolzen einrasten. Vorteilhaft ist es ferner, daß der zweite Verriegelungsbolzen endseitig einen Schraubenkopf und eine Schraubenmutter aufweist, die sich über je ein Distanzstück gegen die Außenseite des Rahmenträgers abstützen. Da der Hakenteil eine horizontal verlaufende Langlochöffnung aufweist, die mit einem vertikalen Schlitz versehen ist, läßt sich die Verriegelungsklinke bei Einnahme der Transportlage des Rahmenträgers über den zweiten Verriegelungsbolzen schwenken, so daß bei Herausnahme des ersten Verriegelungsbolzens aus der am Hauptrahmen vorgesehenen Öffnung die Klinke selbsttätig in ihre Verriegelungsstellung schwenken kann und dabei den zweiten Verriegelungsbolzen erfaßt, so daß der Rahmenträger gegen ein unbeabsichtigtes Verstellen gesichert ist. Ferner wird durch die am Hakenteil vorgesehene Führungsfläche gewährleistet, daß bei Verschwenken des Rahmenträgers von der Arbeitsstellung in die Transportstellung die Führungsfläche des Hakenteils am zweiten Verriegelungsbolzen entlanggleitet, so daß dadurch die Verriegelungsklinke angehoben wird und somit eine Weiterverschwenkung des Rahmenträgers in die endgültige Transportlage gestattet, bis beispielsweise der Rahmenträger gegen eine Anlage kommt, in der der Schlitz des Hakenteils eine Lage über dem zweiten Verriegelungsbolzen einnimmt. Damit der Hakenteil bzw. die Verriegelungsklinke in etwa ihre horizontal verlaufende Lage in der Transportstellung des Rahmenträgers beibehalten, ist zwischen den beiden Platten der Verriegelungsklinke der Steg vorgesehen, der eine Abwärtsverstellung bzw. Aufwärtsverstellung der Verriegelungsklinke in einem bestimmten Winkelgrad zuläßt, jedoch nicht darüber hinaus. Auf diese Weise wird gewährleistet, daß bei Verschwenkung des Rahmenträgers in die vertikale Transportlage die Führungsfläche der Verriegelungsklinke ohne weiteres gegen den zweiten Verriegelungsbolzen zur Anlage kommt und über diesen nach oben verstellt wird, bis die Fangausnehmung bzw. die Langlochöffnung des Hakenteils den zweiten Verriegelungsbolzen übergreifen kann.

Im folgenden wird die Erfindung anhand von lediglich einen Ausführungsweg darstellenden Zeichnungen näher erläutert. Es zeigt:

Fig. 1 eine Rückansicht des Rahmens eines Bodenbearbeitungsgerätes mit nach oben geschwenkten Rahmenträgern,

Fig. 2 eine Darstellung einer Verriegelungsvorrichtung zur Feststellung der Rahmenteile im größeren Maßstab,

Fig. 3 eine ähnliche Ansicht wie in Fig. 2, wobei die zugehörige Verriegelungslasche sich oberhalb eines Verriegelungsbolzens befindet,

Fig. 4 die Frontansicht der Verriegelungsvorrichtung gemäß Fig. 2,

Fig. 5 eine perspektivische Darstellung einer Verriegelungslasche,

Fig. 6 einen Schnitt entlang der Linie 6 - 6
gemäß Fig. 2.

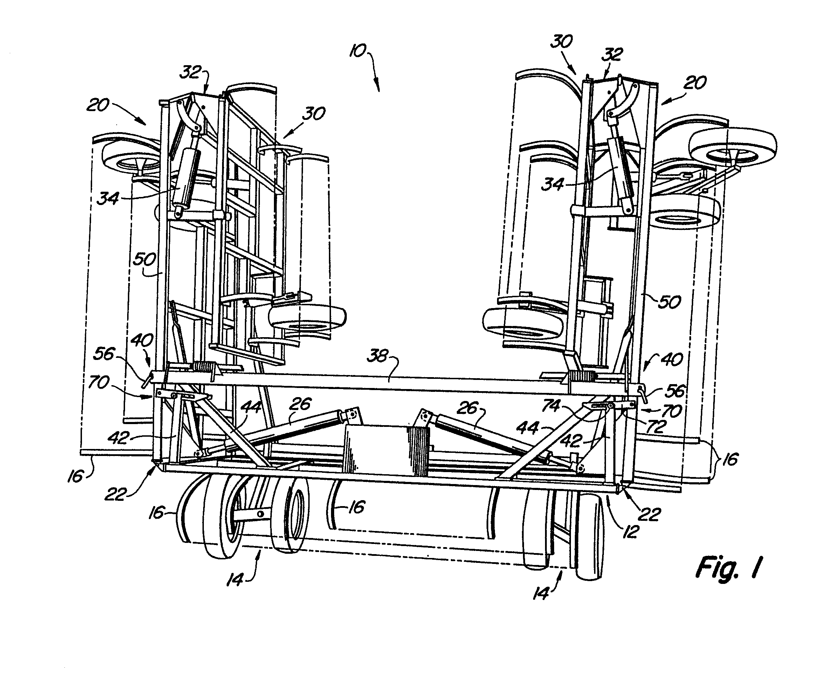

In der Zeichnung ist mit 10 ein aus mehreren Rahmenteilen bestehendes Bodenbearbeitungsgerät bezeichnet, das einen Hauptrahmen 12 aufweist, der auf jeweils zwei nebeneinander liegenden Laufrädern 14 abstützbar ist. Der Hauptrahmen 12 weist zahlreiche nebeneinander liegende Erdbearbeitungswerkzeuge 16, beispielsweise Grubberzinken, auf, die entsprechend angehoben bzw. abgesenkt werden können, indem hierzu die Laufräder 14 entsprechend verschwenkt werden. An dem Hauptrahmen 12 sind seitlich Rahmenträger 20 mittels Gelenken 22 schwenkbar angeschlossen und können somit zwischen einer vertikalen bzw. aufrechten Stellung (siehe Fig. 1) und einer horizontalen Lage (Arbeitsstellung) verstellt werden, wobei der Hauptrahmen 12 und die Rahmenträger 20 und 30 parallel zueinander verlaufen. Ein Hydraulikzylinder 26 ist einenends mit dem Hauptrahmen 12 und anderenends mit dem entsprechenden Seitenrahmen 20 verbunden, um den Rahmenträger 20 zwischen seiner Arbeitsstellung und seiner Transportstellung zu verschwenken. Das in Fig. 1 dargestellte Bodenbearbeitungsgerät 10 besteht aus einem fünfteiligen Gerät und weist hierzu zwei weitere nach hinten verschwenkbare Rahmenteile 30 auf, die über Gelenke 32 an die entsprechenden äußeren Enden der Rahmenträger 20 angeschlossen sind. Zusätzliche Hydraulikzylinder 34 sind hierzu an die Rahmenträger 20 und an die Rahmenteile 30 angeschlossen, um diese über einen Winkel von ca. 180° um ihre Gelenke 32 zu verschwenken, wenn die Rahmenteile 20 ihre Arbeitsstellung eingenommen haben. Das in Fig. 1 dargestellte fünfgliedrige Bodenbearbeitungsgerät 10 kann auch noch mit weiteren Rahmenteilen ausgerüstet werden, die hierzu über entsprechende Gelenke an die jeweils äußeren Rahmenteile angeschlossen werden.

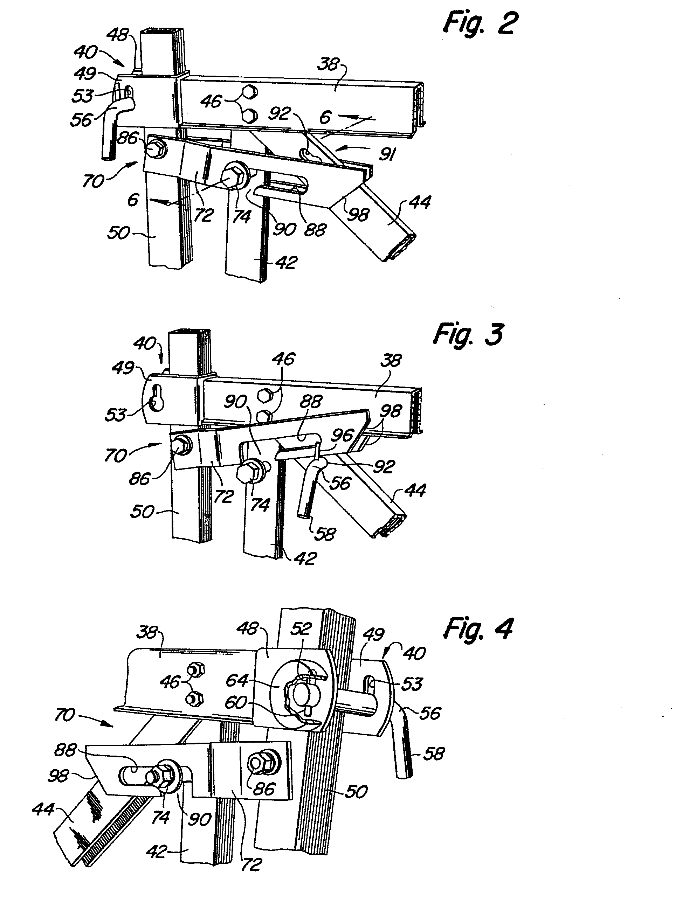

Der Hauptrahmen 12 weist einen quer verlaufenden Träger 38 auf, an dem endseitig U-förmige Halterungen oberhalb des Hauptrahmens 12 angeschlossen sind. Der quer verlaufende Träger 38 stützt sich über rechte und linke vertikal verlaufende Stützen 42 und sich diagonal erstreckende Streben 44 auf dem Hauptrahmen 12 ab. Die oberen Enden der Stützen 42 und der Streben 44 sind mittels Schraubenbolzen 46 an den Träger 38 angeschlossen (siehe Fig. 2 - 4).

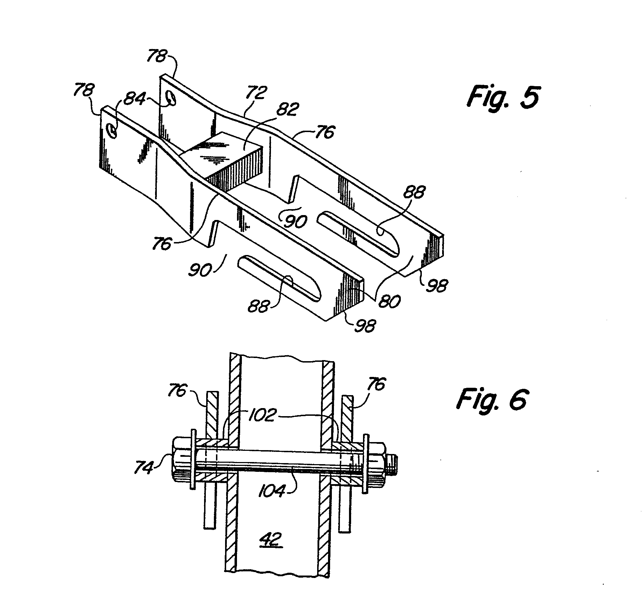

Die Halterung 40 besteht aus zwei parallel zueinander verlaufenden Schenkeln 48 und 49, zwischen denen ein im Querschnitt rechteckig ausgebildeter rohrförmiger Träger 50 aufgenommen ist, der Bestandteil des Rahmenträgers 20 ist und der in der Transportstellung eine vertikale Lage einnimmt. In den Schenkeln 48 und 49 sind endseitig Langlochöffnungen 52 und 53 vorgesehen, die zur Aufnahme eines Verriegelungsbolzens 56 dienen. Werden die beiden äußeren Rahmenträger 20 über die Hydraulikzylinder 26 in ihre Transportstellung verschwenkt, in der sie eine vertikal verlaufende Stellung einnehmen, so befinden sich die entsprechenden Träger 50 hinter den Langlochöffnungen 52 bzw. 53, so daß in diese der Verriegelungsbolzen 56 zur Sicherung der Rahmenträger 20 eingeführt werden kann. Der Verriegelungsbolzen 56 weist hierzu einenends einen Handgriff 58 auf und anderenends eine Bohrung zur Aufnahme eines Sicherungsstiftes 60 (siehe Fig. 6), der die gleiche Lage einnimmt wie der Handgriff 58 (siehe Fig. 4). Somit läßt sich der Verriegelungsbolzen 56 auf einfache Weise in die Langlochöffnungen 52 und 53 einführen, wenn der Handgriff 58 eine vertikal verlaufende Lage einnimmt. Wird der Sicherungsstift 60 durch die Öffnung 52 des vorderen Schenkels 48 eingeführt, so zeigt der Handgriff 58 nach unten und hält den Verriegelungsbolzen 56 in seiner Verriegelungsstellung. Um den Verriegelungsbolzen 56 zu entfernen, wird der Kolben des Hydraulikzylinders 26 eingefahren, so daß keine Kräfte auf den Verriegelungsbolzen 56 wirken und der Handgriff nach oben gedreht werden kann, um ihn dann aus den Langlochöffnungen 52 und 53 herauszunehmen. Um zu verhindern, daß der Verriegelungsbolzen 56 aus den Langlochöffnungen 52 und 53 der U-förmigen Halterung 40 herausgedrückt wird, befindet sich über der Langlochöffnung 52 eine Kappe 64, die mit der Stirnseite des Schenkels 48 entsprechend verschweißt ist. Eine zweite Verriegelungsvorrichtung 70 verhindert eine Verstellung des Rahmenträgers 20 von seiner Transportstellung, in der er verriegelt ist, in eine Arbeitsstellung, wenn der Verriegelungsbolzen 56 entfernt worden ist, bevor der Hydraulikzylinder 26 mit Druckmittel beaufschlagt wird. Die zweite Verriegelungsvorrichtung 70 weist eine schwenkbar gelagerte Verriegelungslasche 72, die an den Träger 50 des Rahmenträgers 20 angeschlossen ist, und einen Verriegelungsbolzen 74 auf, der an die Stütze 42 des Hauptrahmens 12 angeschlossen ist. Die Verriegelungslasche 72 besteht aus zwei parallel zueinander verlaufenden Platten 76 (Fig. 5), die einen hinteren Anschlußteil 78 und einen vorderen Hakenteil 80 aufweisen. Die beiden Platten 76 sind über einen Steg 82 miteinander verbunden, der hierzu stirnseitig an die Innenseiten der Platten 76 angeschweißt sein kann. Im oberen Bereich der gegenüberliegenden Enden des Anschlußteiles 78 befinden sich zwei Langlochöffnungen 84 zur Aufnahme eines Gelenkbolzens 86, der im Träger 50 gelagert ist. Die beiden gegenüberliegenden Enden des Anschlußteiles 78 sind so weit voneinander entfernt, daß die Verriegelungslasche auf dem Gelenkbolzen 86 ohne weiteres verschwenkt werden kann. Die Schwenkbewegung der Verriegelungslasche 72 wird jedoch durch den Steg 82 begrenzt, der bei seiner Aufwärtsbewegung gegen die vertikal verlaufende Stirnseite des Trägers 50 zur Anlage kommt. Das Gewicht der Verriegelungslasche 72 bewirkt eine Verschwenkung der Verriegelungslasche 72 in Richtung des Gelenkbolzens 86 (siehe Fig. 2 und 3), so daß die Verriegelungslasche 72 in eine Stellung verschwenkt wird, in der der Hakenteil 80 gegen den Verriegelungsbolzen 74 zur Anlage kommt, wenn der Rahmenträger 20 seine vertikal verlaufende Stellung eingenommen hat.

Der Hakenteil 80, der sich in einer jeden Platte 76 befindet, weist eine Langlochöffnung 88 auf, die einenends mit einem vertikal verlaufenden Schlitz 90 versehen ist, der auf den Verriegelungsbolzen 74 aufschiebbar ist. Wie aus den Figuren 2 und 4 hervorgeht, wird bei einer Abwärtsverschwenkung des Rahmenträgers 20 die Verriegelungslasche 72 in ihre den Rahmenträger 20 sichernde Stellung gebracht, wobei die Langlochöffnung 88 auf dem Verriegelungsbolzen 74 entlanggleitet, bis er gegen die innere Begrenzung der Langlochöffnung 88 zur Anlage kommt, so daß eine weitere Verschwenkung des Rahmenträgers 20 verhindert wird. Um die Verriegelungslasche 72 aus ihrer Verriegelungsstellung heraus zu verschwenken, muß die Bedienungsperson den Hydraulikzylinder 26 mit Druckmittel versorgen und somit den Rahmenträger 20 in die Stellung gemäß Fig. 1 bzw. 2 anheben, so daß der Schlitz 90 eine Lage oberhalb des Verriegelungsbolzens 74 einnimmt. Danach läßt sich die Verriegelungslasche 72 in eine Entriegelungsstellung gemäß Fig. 3 verschwenken. Die diagonal verlaufende Strebe 44 weist bei 91 eine Langlochöffnung 92 auf (Fig. 2), die zur Aufnahme des Verriegelungsbolzens 56 dient. Wenn der Hydraulikzylinder 26 mit Druckmittel versorgt wird, um beispielsweise die zwischen dem Verriegelungsbolzen 56 und dem Träger 50 auftretenden Druck- und Zugkräfte zu vermindern, kann der Verriegelungsbolzen 56 entsprechend um 180° gedreht und dann aus den Langlochöffnungen 52 und 53 herausgenommen werden, um daraufhin in die Langlochöffnung 92 eingeführt zu werden (siehe Fig. 3 – Entriegelungsstellung). Die Langlochöffnung 92 verläuft in etwa in der gleichen schrägen Ebene wie die Strebe 44 und liegt dabei so dicht neben dem Verriegelungsbolzen 74, daß der Verriegelungsbolzen 56 nach Einführung der Verriegelungslasche 72 in eine geneigt verlaufende Stellung verschwenkt wird, wenn der Rahmenträger zur Gerätemitte verschwenkt wird (siehe Fig. 3). Dabei gleiten die Unterkanten der Platten 76 über den Verriegelungsbolzen 74, wodurch verhindert wird, daß die Verriegelungslasche 72 ihre Verriegelungsstellung einnimmt, wenn der Hydraulikzylinder 26 nicht mit Druckmittel versorgt wird und der Rahmenträger 20 dadurch abgesenkt wird. Ein zweiter Verriegelungsbolzen 96 befindet sich auf dem einen Ende des Verriegelungsbolzens 56 und verhindert, daß der Verriegelungsbolzen 56 vollständig durch die Langlochöffnung 92 rutscht.

Der Hakenteil 80 der beiden Platten 76 ist endseitig mit einer Führungsfläche 98 versehen, so daß bei einer Verschwenkung des Rahmenträgers 20 von seiner Arbeitsstellung in seine Transportstellung (Fig. 3) die Führungsfläche 98 der Verriegelungslasche 72 über den Verriegelungsbolzen 56 gleitet, der sich in der Bohrung bzw. Langlochöffnung 92 befindet, wenn das Bodenbearbeitungsgerät in eine Arbeitsstellung verstellt werden soll. Der Steg 82 (Fig. 5) verhindert, daß die Verriegelungslasche 72 zu weit nach unten verschwenkt wird, und zwar in eine Lage, die sich unterhalb der Lage gemäß Fig. 2 und 4 befindet. Somit kann die Führungsfläche 98 stets an der Oberfläche des Verriegelungsbolzens 56 entlanggleiten, wenn der Rahmenträger 20 in seine Transportstellung verschwenkt wird. Befindet sich der Rahmenträger 20 in seiner Transportstellung, so wird der Verriegelungsbolzen 56 aus der Bohrung bzw. Langlochöffnung 92 herausgenommen und in die Langlochöffnungen 52 und 53 der U-förmigen Halterung 40 eingeführt, um dadurch den Rahmenträger 20 in der Transportstellung zu sichern. Durch Entfernen des Verriegelungsbolzens 56 aus der Bohrung 92 schwenkt die Verriegelungslasche 72 nach unten in eine Stellung gemäß Fig. 2 und 4. Wenn die Bedienungsperson den Verriegelungsbolzen 56 aus der U-förmigen Halterung 40 herausnimmt, bevor der Hydraulikzylinder 26 wieder mit Druckmittel versorgt ist, kann der Rahmenträger 20 sich nur etwas nach unten bewegen, da der Hakenteil 80 der Verriegelungslasche 72 auf dem Verriegelungsbolzen 74 einrastet. Hierdurch wird also sichergestellt, daß der Rahmenträger 20 nur in einen kleinen Bereich verschwenkt wird, da die Verriegelungsvorrichtung 70 eine weitere Verschwenkung verhindert. Danach kann die Bedienungsperson den Hydraulikzylinder 26 mit Druckmittel beaufschlagen, um den Rahmenträger 20 in seine annähernd vertikale Stellung zu verschwenken. Jetzt kann die Verriegelungslasche 72 angehoben werden, um danach den Verriegelungsbolzen 56 in die Bohrung 92 einzuführen und somit die Verriegelungslasche 72 in einer geneigt verlaufenden Stellung zu halten, in der die Langlochöffnung 88 nicht auf dem Verriegelungsbolzen 74 einrastet (siehe Fig. 3). Aus dieser Stellung heraus (siehe Fig. 3) läßt sich der Rahmenträger in seine Arbeitsstellung zurück verschwenken.

Wie aus Fig. 6 hervorgeht, weist der Verriegelungsbolzen 74 zwei Distanzstücke 102 auf, die gegen die Außenfläche der Stütze 42 anliegen und auf dem Schaft 104 des Verriegelungsbolzens 74 aufsitzen.

Patentansprüche

1. Landwirtschaftlich nutzbares Arbeitsgerät (10) mit einem Hauptrahmen (12), an dem Rahmenträger (20) gelenkig angeschlossen und zwischen einer horizontal verlaufenden Arbeitsstellung und einer vertikal verlaufenden Transportstellung verschwenkbar sind, wobei die Rahmenträger (20) in der Transportstellung über eine Verriegelungsvorrichtung (70) arretierbar sind, die zumindest aus einer am Hauptrahmen (12) angeordneten U-förmigen Halterung (40) zur Aufnahme von Rahmenteilen des Rahmenträgers (20) und zur Sicherung des Rahmenträgers (20) in der Halterung (40) aus einem in Öffnungen der Halterung (40) einsteckbaren Verriegelungsbolzen (56) besteht, dadurch gekennzeichnet, daß der Verriegelungsvorrichtung (70) eine den Rahmenträger (20) in der Transportstellung sichernde Verriegelungsklinke (72) zugeordnet ist, die selbsttätig in eine den Rahmenträger (20) sichernde Transportstellung verschwenkbar ist und in dieser Stellung verharrt, bis der Verriegelungsbolzen (56) in eine zweite Position bringbar ist, in der die Verriegelungsklinke (72) sich auf dem ersten Verriegelungsbolzen (56) abstützt und eine Entriegelungsstellung einnimmt.

2. Arbeitsgerät nach Anspruch 1, dadurch gekennzeichnet, daß der Verriegelungsbolzen (56) unterhalb der Verriegelungsklinke (72) am verschwenkbaren Rahmenträger (20) in eine Öffnung (92) einsetzbar ist und ein zweiter Verriegelungsbolzen (74) mit Abstand dazu am Hauptrahmen (12) zur selbsttätigen Aufnahme und Arretierung der Verriegelungsklinke bei Einnahme der Transportstellung des Rahmenträgers (20) angeordnet ist.

3. Arbeitsgerät nach Anspruch 1 oder 2, dadurch gekennzeichnet, daß zur Verschwenkung der Verriegelungsklinke (72) in eine Entriegelungsstellung der erste Verriegelungsbolzen (56) oberhalb des zweiten am Hauptrahmen (12) angeordneten Verriegelungsbolzens (74) in
die am Rahmenträger (20) vorgesehene Langlochöffnung
(92) einsetzbar ist.

4. Arbeitsgerät nach einem oder mehreren der vorhergehenden
Ansprüche, dadurch gekennzeichnet, daß die am Hauptrahmen (12) angeordnete, zwei parallel zueinander verlaufende Schenkel (48) aufweisende, U-förmige Halterung
(40) koaxial zueinander verlaufende Langlochöffnungen
(52, 53) zur Aufnahme des einen Handgriff (58) aufweisenden Verriegelungsbolzens (56) aufweist, wobei das
dem Handgriff (58) gegenüberliegende Ende einen Sicherungsstift (60) trägt, der in Arretierungsstellung des
Handgriffes mittels einer am Schenkel (48) angeordneten
Kappe abdeckbar ist.

5. Arbeitsgerät nach einem oder mehreren der vorhergehenden
Ansprüche, dadurch gekennzeichnet, daß die Verriegelungsklinke (72) einen Hakenteil (80) mit einer auf dem zweiten Verriegelungsbolzen (74) aufstützbaren Führungsfläche (98) aufweist.

6. Arbeitsgerät nach Anspruch 5, dadurch gekennzeichnet,
daß der Hakenteil eine horizontal verlaufende Langlochöffnung (88) mit einem vertikalen Schlitz (90) zur Aufnahme des zweiten Verriegelungsbolzens (74) aufweist,
wobei bei Einnahme der vertikalen Transportlage des
Rahmenträgers (20) der Schlitz (90) über dem zweiten
Verriegelungsbolzen (74) liegt und diesen selbsttätig
übergreift, wenn der erste Verriegelungsbolzen (56) aus
seiner am Rahmenträger (20) vorgesehenen Langlochöffnung (92) herausgenommen wird, wobei ein horizontal verlaufender, die Langlochöffnung (88) bildender Steg unter den zweiten Verriegelungsbolzen (74) bewegbar ist,
der eine Aufwärtsverstellung der Verriegelungsklinke
(72) verhindert.

7. Arbeitsgerät nach einem oder mehreren der vorhergehenden Ansprüche, dadurch gekennzeichnet, daß die Verriegelungsklinke (72) aus parallel zueinander verlaufenden Platten (76) mit je einem Hakenteil (80) gebildet ist und einen die Platten verbindenden Steg (82) aufweist, der zur Begrenzung der Schwenkbewegung der Verriegelungsklinke (72) gegen Rahmenteile des Rahmenträgers (20) zur Anlage kommt, wobei die Hakenteile (80) in der Transportstellung des Rahmenträgers (20) diesen umgeben und auf dem zweiten sich durch den Rahmenträger erstreckenden Verriegelungsbolzen (74) einrasten.

8. Arbeitsgerät nach Anspruch 7, dadurch gekennzeichnet, daß der zweite Verriegelungsbolzen (74) endseitig einen Schraubenkopf und eine Schraubenmutter aufweist, die sich über je ein Distanzstück (102) gegen die Außenseite des Rahmenträgers (20) abstützen.

1/3

Fig. 1

**Fig. 2**

**Fig. 3**

**Fig. 4**

0136535

3/3

Fig. 5

Fig. 6

**0136535**

Nummer der Anmeldung

EP 84 11 0251

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-3 967 684 (V.D. HAVERDINK) <br> * Ganzes Dokument * | 1 | A 01 B 73/04 |
| A | US-A-4 206 816 (R.W. RICHARDSON et al.) <br> * Spalte 9, Zeilen 49-58; Spalte 11, Zeilen 8-14; Figuren * | 1 | |
| A | DE-A-2 944 944 (KONGSKILDE KONCERNSELSKAB A/S) <br> * Ansprüche, Figuren * | 1 | |

| RECHERCHIERTE SACHGEBIETE (Int. Cl.4) |
|---|
| A 01 B 73/00 |

Der vorliegende Recherchenbericht wurde für alle Patentansprüche erstellt.

| Recherchenort <br> BERLIN | Abschlußdatum der Recherche <br> 27-11-1984 | Prüfer <br> WUNDERLICH J E |
|---|---|---|